# EUROPEAN PATENT SPECIFICATION

(11) **EP 2 778 059 B1**
(45) Date of publication and mention of the grant of the patent: **19.08.2015**
(21) Application number: 13167051.5
(22) Date of filing: 08.05.2013
(51) Int. Cl.: B64C 27/473, B64C 11/20, C22C 45/00

(54) **Amorphous metal rotor blade abrasion strip**
Rotorblattabrasionsstreifen aus amorphem Metall
Bande d'abrasion de pale de rotor métallique amorphe

(30) Priority: 14.03.2013 US 201313829191
(43) Date of publication of application: 17.09.2014
(73) Proprietor: Bell Helicopter Textron Inc., Fort Worth, TX 76101 (US)
(72) Inventor: Sutton, Drew, Watauga, TX Texas 76148 (US); Nissen, Jeffrey P., Fort Worth, TX Texas 76104 (US); Haldeman, Andrew, Fort Worth, TX Texas 76102 (US)
(74) Representative: Lawrence, John

(56) References cited:
- DE-A1- 19 617 556
- GB-A- 2 469 516
- US-A- 3 215 511
- US-A- 4 728 262
- US-A- 6 044 893
- US-B1- 6 447 254

## Description

### BACKGROUND

### 1. Field of the Invention

The present application relates generally to rotor blades, and more specifically, to abrasion strips for rotor blades.

### 2. Description of Related Art

Abrasion strips are well known in the art for effectively protecting the leading edge of a rotor blade during flight, e.g., from water and sand, both known for rapidly destroying the structural integrity of the blades during flight. It is a desired feature to manufacture the abrasion strips having sufficient toughness to prevent the penetration of the water and sufficient durability "hardness" to prevent penetration of the sand, typically at airspeeds approaching Mach 1. To achieve these features, conventional abrasion strips are typically manufactured with metals such as stainless steel, titanium, and/or nickel alloys and generally formed through stretching and electroforming processes.

The aerodynamic performance of the rotor blade is very dependent on maintaining the original manufactured shape of the blade. For this reason, the tolerances on the blade are maintained tightly. The complex contours associated with the blade shapes pose manufacturing challenges for the above-referenced materials.

Abrasion strips composed of stainless steel are typically formed between dies at room temperature from sheet stock material. Common problems with this process are: natural spring back after the forming process; and, limitations in bend radii at the nose of the abrasion strip. The minimum bend radius is also an issue on tapering swept tips where airfoil thickness and nose radius is often below values for forming. It should be noted that stainless steel is relatively dense, which can cause negative weight and balance impacts if used liberally.

Titanium alloys are less dense than stainless steel, but require an advanced manufacturing process and expensive tooling. Conventional manufacturing methods include the process of super-plastic forming (SPF), wherein the titanium requires heating the titanium workpiece and dies in a furnace (typically inert environment) to just below the beta-transus temperature (1600F-1700F) of the Titanium alloy and using pressurized inert gas to blow the workpiece into the shape of the forming die. The abrasion strip blank often requires extensive finishing to remove the alpha-case that has formed during the SPF process as well as supplemental chemical milling to smooth material thinning and control thickness variations that have occurred during the SPF process.

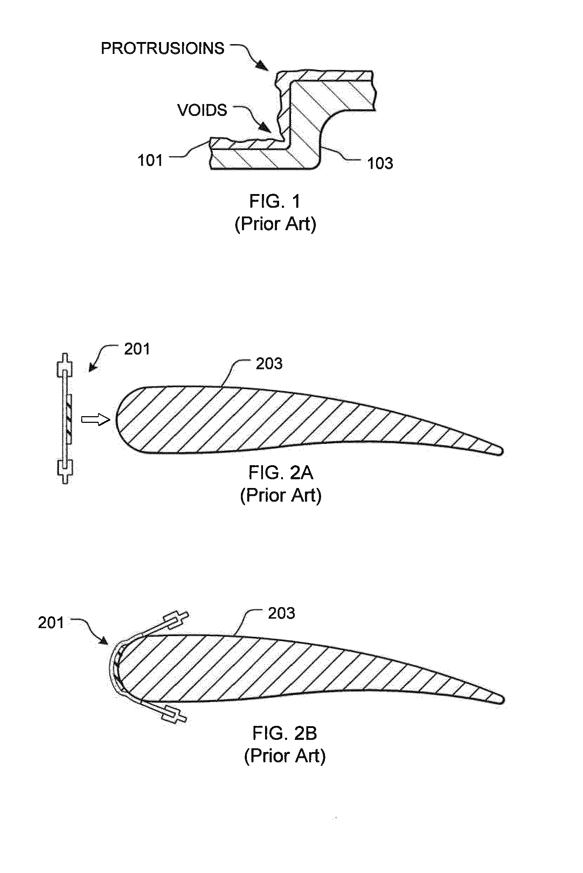

Nickel alloy abrasion strips are typically electroformed (forming substrate removed at completion) or are electroplated to a metallic substrate. FIG. 1 depicts the limitations of electroforming, wherein the material 101 being applied to the substrate 103 typically forms voids at the inside corners and protrusions on the outside corners. Further, forming and plating are both expensive and complicated processes highly susceptible to defects due to chemical and electrical imbalances. Further, electroforming is known to create undetectable flaws which drastically reduce the allowable of the material.

Another known process includes stretch forming, as depicted in FIGS. 2A and 2B. The process can be utilized with one of more of the materials above, wherein the metal 201 is stretched over the a die 203 having a general shape of the leading edge contouring of a rotor blade.

It should be understood that the manufacturing processes discussed above adversely affect the structural integrity of the metals. For example, stretching the metal causes work hardening, thereby adversely changing the characteristics of the material. In addition, the processes are time consuming and expensive.

Although the foregoing developments in abrasion strips represent great strides, many shortcomings remain.

Examples of known abrasion strips/rotor blade edge shields and/or methods of manufacturing such components are disclosed in US 6,447,245, US 3,215,511, US 4,728,262, GB 2469516 and DE 19617556. However, each of these references rely on some form of hot pressing, molten casting or heat forming techniques in order to fabricate the strip. In US 6,044,893, a method and apparatus for producing a formed article of amorphous alloy is disclosed. The molding apparatus comprises a forced cooling casting mold which is provided with a sprue and at least one molding cavity communicating with the sprue and further with a cutting member disposed in the casting mold movably in the direction of the sprue, a melting vessel movable in the direction of the sprue, and a molten metal transferring member disposed slidably in the melting vessel or the molding cavity of the casting mold. A formed article of amorphous alloy is obtained by melting an alloying material in the vessel, forcibly transferring the resultant molten alloy into the molding cavity by means of the molten metal transferring member and meanwhile exerting pressure on the molten alloy, rapidly cooling and solidifying the molten alloy in the casting mold thereby conferring amorphousness on the alloy and meanwhile gradually cooling and solidifying the molten alloy in the part of the sprue of the casting mold thereby crystallizing the alloy in that part, cutting the part which has been embrittled by the crystallization by means of the cutting member, and thereafter separating the melting vessel from the casting mold.

### DESCRIPTION OF THE DRAWINGS

The novel features believed characteristic of the embodiments of the present application are set forth in the appended claims. However, the embodiments themselves, as well as a preferred mode of use, and further objectives and advantages thereof, will best be understood by reference to the following detailed description when read in conjunction with the accompanying drawings, wherein:
FIG. 1 is a cross-sectional side view of a substrate undergoing a conventional electroplating manufacturing process;
FIGS. 2A and 2B are a cross-sectional side view of a substrate undergoing a conventional stretching manufacturing process;
FIG. 3 is a side view of a helicopter according to a preferred embodiment of the present application;
FIG. 4 is a perspective view of a tiltrotor aircraft according to another preferred embodiment of the present application;
FIG. 5 is a perspective view of a rotor blade of FIG. 1 or FIG. 2 with an abrasion strip in accordance with the preferred embodiment of the present application;
FIG. 6 is a cross-sectional view of FIG. 5 taken at VI-VI; and
FIGS. 7A-7C depict the preferred process to manufacture the abrasion strip of FIG. 5.

While the abrasion strip and method of the present application is susceptible to various modifications and alternative forms, specific embodiments thereof have been shown by way of example in the drawings and are herein described in detail. It should be understood, however, that the description herein of specific embodiments is not intended to limit the invention to the particular embodiment disclosed, but on the contrary, the intention is to cover all modifications, equivalents, and alternatives falling within the spirit and scope of the process of the present application as defined by the appended claims.

### DETAILED DESCRIPTION OF THE PREFERRED EMBODIMENT

Illustrative embodiments of the apparatus and method are provided below. It will of course be appreciated that in the development of any actual embodiment, numerous implementation-specific decisions will be made to achieve the developer's specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

The rotor blade with the abrasion strip and method of the present application overcome the above-listed problems commonly associated with conventional abrasive strips. Specifically, the abrasion strip manufactured with metal having sufficient toughness to prevent water exposure and sufficient hardness to prevent sand and debris exposure to the rotor blade during flight. This feature is achieved by molding an amorphous metallic material so as to have the same contouring of the leading edge of the rotor blade, then thereafter removably attaching the molded amorphous metal to the leading edge. Further detailed description of these features are provided below and illustrated in the accompanying drawings.

The rotor blade with the abrasion strip and manufacturing process of the present application will be understood, both as to its structure and operation, from the accompanying drawings, taken in conjunction with the accompanying description. Several embodiments of the system are presented herein. It should be understood that various components, parts, and features of the different embodiments may be combined together and/or interchanged with one another, all of which are within the scope of the present application, even though not all variations and particular embodiments are shown in the drawings. It should also be understood that the mixing and matching of features, elements, and/or functions between various embodiments is expressly contemplated herein so that one of ordinary skill in the art would appreciate from this disclosure that the features, elements, and/or functions of one embodiment may be incorporated into another embodiment as appropriate, unless described otherwise.

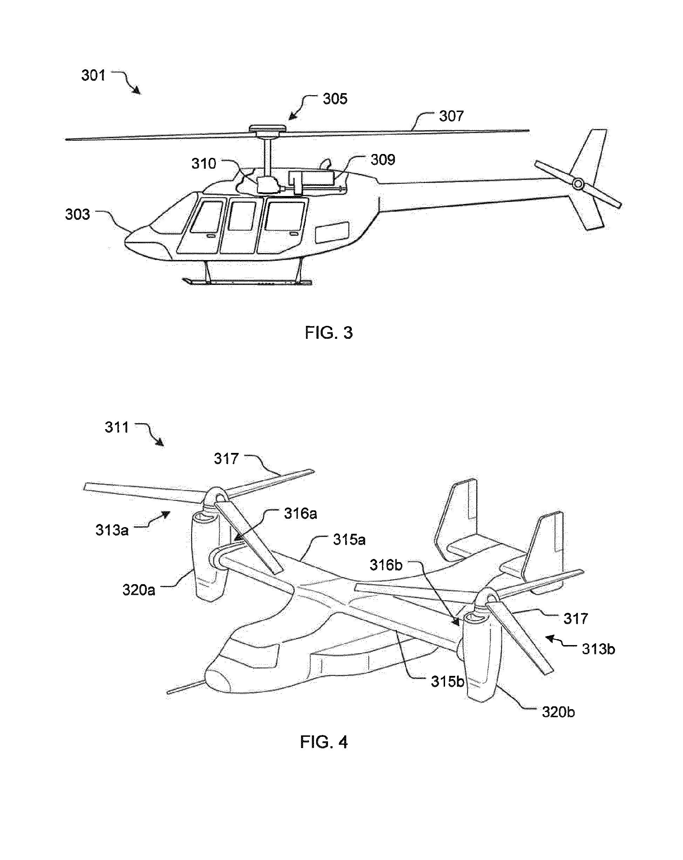

Referring now to the drawings wherein like reference characters identify corresponding or similar elements throughout the several views, FIG. 3 depicts an aircraft 301 in accordance with a preferred embodiment of the present application. In the exemplary embodiment, aircraft 301 is a helicopter having a fuselage 303 and a rotor system 305 carried thereon. A plurality of rotor blades 307 is operably associated with rotor system 305 for creating flight. An engine 309 rotatably couples to a transmission 310, which in turn drives rotor system 305.

Although shown associated with a helicopter, it will be appreciated that the rotor blades with the abrasion strips of the present application may also be utilized with different types of rotary aircraft and rotary systems, e.g., windmills and fixed wing aircraft. For example, FIG. 4 illustrates a tiltrotor aircraft 311 that utilizes the abrasion strips in accordance with the present application.

Tiltrotor aircraft 311 includes rotor assemblies 313a and 313b that are carried by wings 315a and 315b, and are disposed at end portions 316a and 316b of wings 315a and 315b, respectively. Tilt rotor assemblies 313a and 313b include nacelles 320a and 320b, which carry the engines and transmissions of tilt rotor aircraft 311. Tilt rotor assemblies 313a and 313b move or rotate relative to wing members 315a and 315b between a helicopter mode in which tilt rotor assemblies 313a and 313b are tilted upward, such that tilt rotor aircraft 311 flies like a conventional helicopter; and an airplane mode in which tilt rotor assemblies 313a and 313b are tilted forward, such that tilt rotor aircraft 311 flies like a conventional propeller driven aircraft.

Rotor assemblies 313a and 313b include a plurality of rotor blades 317, commonly known as proprotors, which also utilize the abrasion strips in accordance with the present application.

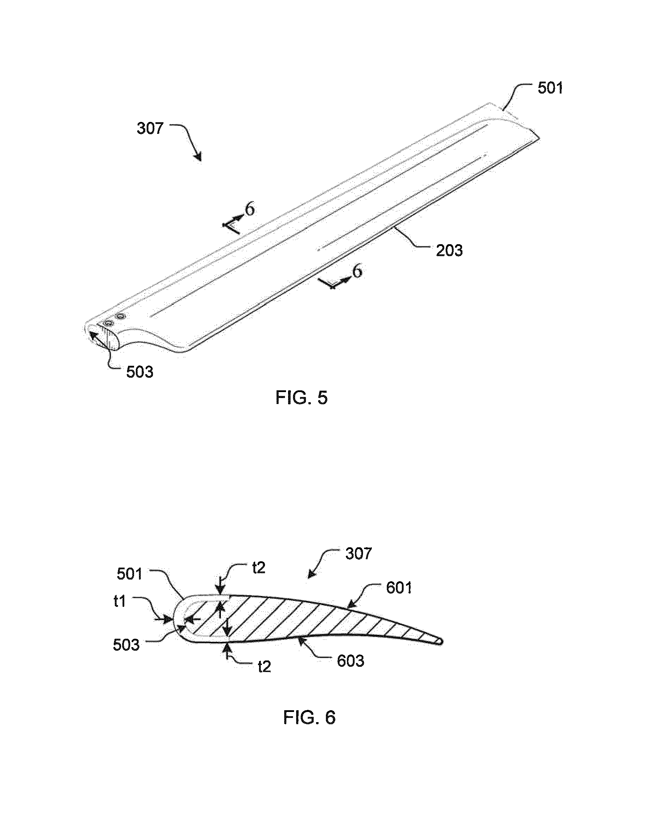

FIG. 5 depicts a perspective view of rotor blade 307 having an abrasion strip 501 removably attached thereto at leading edge 503. In the contemplated embodiment, abrasion strip 501 extends the entire length of the rotor blade 307; however, alternative embodiments could include rotor blades with abrasion strips that extend a partial length of the rotor blade.

One unique feature believed characteristic of the present application is manufacturing abrasion strip 501 with an amorphous material that is sufficiently toughness to prevent water from causing damage at the leading edge of the rotor blade, and that is sufficiently durable to prevent damage from sand and debris during flight.

It should be understood that utilizing conventional metals such as stainless steel, nickel, and titanium to form abrasion strips with current manufacturing processes does not provide a good compromise of toughness and strength properties to efficiently prevent water and sand damage during flight. Thus, amorphous metal is preferred in the contemplated embodiment because the metal has sufficient toughness and strength when manufactured through a molding process. The relatively low melting temperature and viscosity of amorphous material is ideal for the contemplated manufacturing process. For example, during the molding manufacturing process, amorphous metals do not crystallize, thereby being formed without undesired grain boundaries that typically cause the metal to fail.

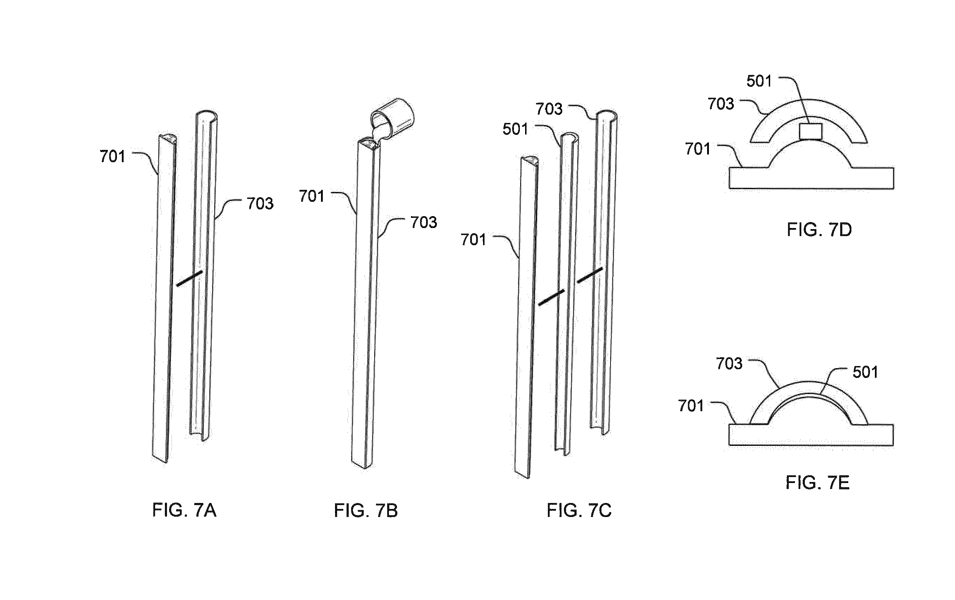

In the preferred embodiment, the amorphous metal is an alloy having atoms of significantly different sizes, leading to low free volume in molten state. The viscosity prevents the atoms moving enough to form an ordered lattice. The material structure also results in low shrinkage during cooling and resistance to plastic deformation. The absence of grain boundaries leads to a better resistance to wear and corrosion. It will be appreciated that the abrasion strip of the present application creates a very smooth surface finish, resulting in reduced finish processing. These features are achieved through pouring mold or pressing at low temperatures. Further, the abrasion strip has a high hardness, which in turn increased durability. Further detailed description of these features is provided below with reference to FIGS. 7A-7C.

FIG. 6 is a cross-sectional view of rotor blade 307 taken at VI-VI of FIG. 6. As depicted, the abrasion strip 501 is attached to the leading edge 503 of rotor blade 307 and extends partially around the suction surface 601 and pressure surface 603 of blade 307. In the exemplary embodiment, the thickness of the abrasion strip 501 varies, for example, the thickness "t1" at leading edge 503 is greater than the thickness "T2" at the suction surface 601 and the pressure surface 603 of rotor blade 307 is configured to sit flush with the suction and pressure surfaces when assembled.

It will be appreciated that the process of manufacturing an abrasion strip having various thicknesses is a complicated and expensive process when utilizing conventional manufacturing methods. For this reason, it is desired to mold abrasion strip 501 such that a desired thickness is achieved while also matching the contouring of the blade. It should be understood that the above conventional metals are not molded due to the limitations of their material properties and manufacturing process.

FIGS. 7A-7C depict the preferred process of manufacturing abrasion strip 501, which includes providing two casting members 701 and 703 having an inner surface contoured to match the outer surface of leading edge 503. The two casting members are joined together and amorphous material is poured or pumped into a cavity formed by the casting members. Thereafter, the two casting members are released from each other and the molded abrasion strip 501 is removed. The abrasion strip 501 is then removably attached to leading edge 503 of the rotor. FIGS. 7D and 7E depict an alternative process of manufacturing abrasions strip 501, which includes cold forming a slug of amorphous material between members 701 and 703 in lieu of the described process of pouring the material.

Although particular step sequences are shown, described, and claimed, it should be understood that steps may be performed in any order, separated or combined unless otherwise indicated and will still benefit from the present disclosure.

It is apparent that a rotor blade with an abrasion strip and method with significant advantages has been described and illustrated. The particular embodiments disclosed above are illustrative only, as the embodiments may be modified and practiced in different but equivalent manners apparent to those skilled in the art having the benefit of the teachings herein. It is therefore evident that the particular embodiments disclosed above may be altered or modified, and all such variations are considered within the scope of the application. Accordingly, the protection sought herein is as set forth in the appended claims.

Although the present embodiments are shown above, they are not limited to just these embodiments, but are amenable to various changes and modifications without departing from scope of the appended claims.

## Claims

1. A rotor blade (307) with an abrasion strip (501), the abrasion strip (501) comprising:
a molded amorphous metal contoured to match a leading edge (503) of the rotor blade (307);
wherein the molded amorphous metal is removably attachable to the leading edge (503); and
wherein the molded amorphous metal is configured to prevent damage to the leading edge (503) of the rotor blade (307) during flight,
**characterised in that**
the molded amorphous metal is non-crystallized and has a greater thickness at the leading edge of the rotor blade (307).

2. An aircraft (301, 311), comprising:
a rotor blade (307) having a leading edge (503) and
an abrasion strip (501), the rotor blade being according to claim 1.

3. The rotor blade (507) of claim 1, or the aircraft of claim 2, wherein the abrasion strip (501) is sufficiently tough so as to prevent water damage to the rotor blade (307) during flight.

4. The rotor blade (507) of claim 1 or claim 3, or the aircraft of claim 2 or claim 3, wherein the abrasion strip (501) is sufficiently hard so as to prevent sand debris damage to the rotor blade (307) during flight.

5. The rotor blade (507) of claim 1, or of claim 3 or claim 4, or the aircraft of any of claims 2 to 4, wherein the rotor blade (307) is a helicopter rotor blade or a tiltrotor aircraft proprotor (317).

6. The rotor blade (507) of claim 1, or any of claims 3 to 5, or the aircraft of any of claims 2 to 5, wherein the abrasion strip (501) sits in flush with a pressure surface (603) and a suction surface (601) of the rotor blade (307).

7. The rotor blade (507) of claim 1, or any of claims 3 to 6, or the aircraft of any of claims 2 to 6, wherein the abrasion strip (501) extends an entire longitudinal length of the rotor blade (307).

8. A method, comprising:
molding an abrasion strip (501) composed of an amorphous metal to match a leading edge (503) of a rotor blade (307) through a molding manufacturing process;
wherein the abrasion strip (501) is configured to removably attach to the leading edge (503) of the rotor blade (307) when assembled,
**characterised in that** the amorphous metal is non-crystallized and wherein the abrasion strip (501) is molded having a greater thickness at the leading edge (503) of the rotor blade (307).

## Patentansprüche

1. Rotorblatt (307) mit einem Abrasionsstreifen (501), der Abrasionsstreifen (501) bestehend aus:
einem geformten amorphen Metall, das so profiliert ist, dass es mit einer Eintrittskante (503) des Rotorblattes (307) übereinstimmt;
wobei das geformte amorphe Metall abnehmbar an der Eintrittskante (503) befestigt werden kann;und
wobei das geformte amorphe Metall so gestaltet ist, dass es Schäden an der Eintrittskante (503) des Rotorblattes (307) während des Fluges verhindert,
**dadurch gekennzeichnet, dass**
das geformte amorphe Metall, nichtkristallisiert ist und eine größere Dicke an der Eintrittskante des Rotorblattes (307) hat.

2. Ein Fluggerät (301, 311) bestehend aus:
einem Rotorblatt (307) mit einer Eintrittskante (503) und einem Abrasionsstreifen (501), wobei das Rotorblatt gemäß Anspruch 1 aufgebaut ist.

3. Das Rotorblatt (507) in Anspruch 1 oder das Fluggerät in Anspruch 2, wobei der Abrasionsstreifen (501) ausreichend fest ist, um Wasserschäden am Rotorblatt (307) während des Fluges zu verhindern.

4. Das Rotorblatt (507) in Anspruch 1 oder Anspruch 3 oder das Fluggerät in Anspruch 2 oder Anspruch 3, wobei der Abrasionsstreifen (501) ausreichend hart ist, um Schäden durch Sandkörner am Rotorblatt (307) während des Fluges zu verhindern.

5. Das Rotorblatt (507) in Anspruch 1 oder in Anspruch 3 oder Anspruch 4 oder das Fluggerät in einem der Ansprüche 2 bis 4, wobei das Rotorblatt (307) ein Helikopter-Rotorblatt oder ein Kipprotor-Fluggerät oder Proprotor (317) ist.

6. Das Rotorblatt (507) in Anspruch 1 oder eines der Ansprüche 3 bis 5 oder das Fluggerät eines der Ansprüche 2 bis 5, wobei der Abrasionsstreifen (501) bündig mit einer Druckfläche (603) und einer Saugfläche (601) des Rotorblattes (307) sitzt.

7. Das Rotorblatt (507) in Anspruch 1 oder eines der Ansprüche 3 bis 6 oder das Fluggerät eines der Ansprüche 2 bis 6, wobei sich der Abrasionsstreifen (501) über die gesamte Länge des Rotorblattes (307) erstreckt.

8. Ein Verfahren bestehend aus:
der Formung eines Abrasionsstreifens (501), der aus einem amorphen Metall besteht und durch einen Formgebungsprozess an eine Eintrittskante (503) eines Rotorblattes (307) angepasst wird;
wobei der Abrasionsstreifen (501) so gestaltet ist, dass er bei der Montage abnehmbar mit der Eintrittskante (503) des Rotorblattes (307) verbunden wird,
**dadurch gekennzeichnet, dass** das amorphe Metall nichtkristallisiert ist und der Abrasionsstreifen (501) so geformt ist, dass er an der Eintrittskante (503) des Rotorblattes (307) eine größere Dicke aufweist.

## Revendications

1. Une pale de rotor (307) avec une plaque d'usure (501), la plaque d'usure (501) comprenant :
un métal amorphe moulé profilé de façon à épouser un bord d'attaque (503) de la pale de rotor (307),
où le métal amorphe moulé peut être fixé de manière amovible au bord d'attaque (503), et
où le métal amorphe moulé est configuré de façon à empêcher une détérioration du bord d'attaque (503) de la pale de rotor (307) en vol,
**caractérisé en ce que**
le métal amorphe moulé est non cristallisé et possède une épaisseur plus grande au niveau du bord d'attaque de la pale de rotor (307).

2. Un aéronef (301, 311), comprenant :
une pale de rotor (307) possédant un bord d'attaque (503), et
une plaque d'usure (501), la pale de rotor étant conforme à la Revendication 1.

3. La pale de rotor (507) selon la Revendication 1, ou l'aéronef selon la Revendication 2, où la plaque d'usure (501) est suffisamment résistante pour empêcher une détérioration due à l'eau de la pale de rotor (307) en vol.

4. La pale de rotor (507) selon la Revendication 1 ou 3, ou l'aéronef selon la Revendication 2 ou 3, où la plaque d'usure (501) est suffisamment dure pour empêcher une détérioration due à des débris de sable de la pale de rotor (307) en vol.

5. La pale de rotor (507) selon la Revendication 1, ou selon la Revendication 3 ou 4, ou l'aéronef selon l'une quelconque des Revendications 2 à 4, où la pale de rotor (307) est une pale de rotor d'hélicoptère ou un hélirotor d'aéronef à rotors basculants (317).

6. La pale de rotor (507) selon la Revendication 1, ou selon l'une quelconque des Revendications 3 à 5, ou l'aéronef selon l'une quelconque des Revendications 2 à 5, où la plaque d'usure (501) est à fleur avec une surface de pression (603) et une surface d'aspiration (601) de la pale de rotor (307).

7. La pale de rotor (507) selon la Revendication 1, ou selon l'une quelconque des Revendications 3 à 6, ou l'aéronef selon l'une quelconque des Revendications 2 à 6,
où la plaque d'usure (501) s'étend sur la totalité d'une longueur longitudinale de la pale de rotor (307).

8. Un procédé, comprenant :
le moulage d'une plaque d'usure (501) composée d'un métal amorphe destinée à épouser un bord d'attaque (503) d'une pale de rotor (307) par un processus de fabrication par moulage,
où la plaque d'usure (501) est configurée de façon à être fixée de manière amovible au bord d'attaque (503) de la pale de rotor (307) lorsqu'elle est assemblée,
**caractérisé en ce que** le métal amorphe est non cristallisé et où la plaque d'usure (501) est moulée avec une épaisseur plus grande au niveau du bord d'attaque (503) de la pale de rotor (307).
